# DEMANDE DE BREVET EUROPEEN

(11) **EP 1 107 445 A1**
(43) Date de publication de la demande: **13.06.2001**
(21) Numéro de dépôt: 00204221.6
(22) Date de dépôt: 28.11.2000
(51) Int. Cl.: H02P 6/08

(54) **Procédé pour alimenter un moteur polyphasé**

(30) Priorité: 07.12.1999 FR 9915420
(71) Demandeur: Koninklijke Philips Electronics N.V., 5621 BA Eindhoven (NL)
(72) Inventeur: Uguen, Emeric, 75008 Paris (FR); Buthker, Henricus Cornelis, 75008 Paris (FR); Van Hout, Henricus Marinus, 75008 Paris (FR)
(74) Mandataire: Chaffraix, Jean

(57) **Abrégé**

La présente invention concerne un procédé pour alimenter un moteur polyphasé au moyen d'une pluralité d'enroulements (E1, E2, E3), chacun étant destiné à être excité au moyen d'un signal de commande (I1, I2, I3).
Le procédé selon l'invention inclut les étapes suivantes :
. identification de celui des signaux de commande qui a la plus grande valeur absolue, et
. connexion à une borne de référence de potentiel (VCC ou GND) de l'enroulement correspondant.

L'invention permet de réduire les pertes dues aux commutations dans les étages de puissance alimentant les enroulements, et d'augmenter le rendement du dispositif d'alimentation du moteur.

Application : Commande de moteurs de disques durs.

## Description

La présente invention concerne un procédé pour alimenter un moteur polyphasé au moyen d'une pluralité d'enroulements, chacun étant destiné à être excité au moyen d'un signal de commande.

Des moteurs polyphasés sont couramment utilisés dans nombre d'applications, en particulier au sein de systèmes de stockage d'informations incluant un disque à la surface duquel les informations sont mémorisées, et au moins une tête de lecture et/ou écriture destinée à scruter la surface du disque, lequel est entraîné en rotation par le moteur polyphasé. Les informations pourront par exemple être gravées sur le disque en vue d'une lecture optique, ou consister en des champs magnétiques localisés en vue d'une lecture magnétique, par exemple au moyen d'un barreau magnéto-résistif, comme c'est le cas pour les disques durs utilisés dans l'industrie informatique.

Dans ce dernier type d'applications, les moteurs utilisés sont le plus souvent des moteurs de type triphasé, c'est-à-dire munis de trois enroulements destinés à être excités par trois courants, constituant les signaux de commande, successivement décalés de 2.Π/3, ce qui est obtenu en soumettant les enroulements à trois tensions également successivement décalées de 2.Π/3 au moyen d'un dispositif d'alimentation. L'alimentation en tension de chaque enroulement est opérée par un étage de puissance comprenant deux transistors, disposés en série entre deux bornes d'alimentation, c'est-à-dire une borne positive d'alimentation et une masse, un noeud intermédiaire entre lesdits transistors étant relié à l'enroulement.

Selon les procédés d'alimentation actuellement utilisés, la tension d'alimentation de chacun des enroulements résulte d'un pilotage particulier des commutations des transistors inclus dans son étage de puissance associé. Or, du fait de grandes capacités parasites dues aux importantes dimensions des transistors de puissance, les commutations desdits transistors provoquent des pertes non négligeables et ont donc une influence néfaste sur le rendement énergétique du dispositif d'alimentation du moteur.

L'un des buts de la présente invention est d'améliorer le rendement en proposant un procédé d'alimentation nécessitant un volume de commutations des transistors inclus dans les étages de puissance plus faible que dans les procédés d'alimentation de moteurs polyphasés connus.

A cet effet, un procédé d'alimentation conforme au paragraphe introductif inclut selon l'invention les étapes suivantes :
. identification de celui des signaux de commande qui a la plus grande valeur absolue, et
. connexion à une borne de référence de potentiel de l'enroulement correspondant.

L'invention permet de réduire d'un tiers le volume de commutations des transistors de puissance nécessaire à l'alimentation d'un moteur triphasé, car chaque enroulement se trouve relié à une borne de référence de potentiel pendant un tiers de la période de son signal de commande. Plus généralement, l'invention permet de réduire de 1/N le volume de commutations des transistors de puissance nécessaire à l'alimentation d'un moteur muni de N enroulements.

Dans une variante de l'invention, un procédé d'alimentation tel que décrit dans le paragraphe introductif inclut les étapes suivantes :
. identification de celui des signaux de commande qui a la plus grande valeur instantanée, et
. connexion à une borne de référence de potentiel de l'enroulement correspondant.

Dans cette variante de l'invention, les enroulements sont alternativement connectés à une même borne de référence de potentiel, par exemple la borne positive d'alimentation. Ceci permet de simplifier la structure de la circuiterie utilisée pour l'implémentation de l'invention.

Dans une autre variante de l'invention, un procédé d'alimentation tel que décrit dans le paragraphe introductif inclut les étapes suivantes :
. identification de celui des signaux de commande qui a la plus faible valeur instantanée, et
. connexion à une borne de référence de potentiel de l'enroulement correspondant.

Dans cette variante de l'invention, les enroulements sont alternativement connectés à une même borne de référence de potentiel, par exemple la masse. Ceci permet de simplifier la structure de la circuiterie utilisée pour l'implémentation de l'invention.

Dans un mode de mise en oeuvre particulier de l'invention, l'étape d'identification inclut une détection d'une inversion de signe d'un signal de commande.

Une telle détection permet une implémentation simple de l'étape d'identification.

Dans un mode de mise en oeuvre avantageux de l'invention, chaque signal de commande est constitué d'une succession de valeurs discrètes, qui, lorsque l'enroulement excité par ledit signal n'est pas relié à une borne de référence de potentiel, suivent une évolution pseudo sinusoïdale en fonction du temps.

Ce mode de mise en oeuvre permet un contrôle aisé, sous forme numérique, de la valeur de la tension d'alimentation de chacun des enroulements.

Dans un mode de mise en oeuvre préféré de l'invention, chaque valeur discrète est obtenue en ajustant un rapport cyclique d'un signal dit de consigne destiné à gérer la conduction de deux transistors complémentaires disposés en série entre deux bornes d'alimentation, un noeud intermédiaire entre lesdits transistors étant relié à une borne de l'un des enroulements.

Ce mode de mise en oeuvre permet d'assurer que les signaux de commande suivent tous une évolution polyphasée sinusoïdale conforme à celle qui serait la leur s'ils étaient destinés à exciter des enroulements polyphasés non-alternativement connectés à une borne de référence de potentiel, comme c'est le cas dans les procédés d'alimentation connus. On verra par la suite que, outre la réduction des pertes dues aux commutations des transistors inclus dans les étages de puissance, l'invention permet une diminution de la tension d'alimentation desdits étages de puissance sans modification de la valeur du travail fourni par le moteur, ou encore une augmentation de la valeur dudit travail à tension d'alimentation identique, ce qui équivaut à une augmentation sensible et avantageuse du rendement énergétique du dispositif d'alimentation du moteur.

Dans une de ses implémentations possibles, l'invention concerne un dispositif d'alimentation d'un moteur polyphasé muni d'une pluralité d'enroulements, chacun étant destiné à être excité au moyen d'un signal de commande, dispositif incluant :
. des moyens de contrôle permettant de connecter alternativement chaque enroulement à une borne de référence de potentiel, et
. des moyens d'identification permettant d'identifier celui des enroulements qui doit être connecté à la borne de référence de potentiel.

Comme on l'a vu précédemment, l'enroulement qui sera identifié par les moyens d'identification en vue de sa connexion à une borne de référence de potentiel pourra être celui qui est soumis au signal de commande ayant la plus grande valeur absolue, la plus grande valeur instantanée, ou encore la plus faible valeur instantanée.

Si la présente invention peut être utilisée dans tous types de systèmes dans lesquels un moteur polyphasé est utilisé, sa mise en oeuvre est particulièrement avantageuse dans des systèmes de stockage d'informations. L'invention concerne donc également un appareil destiné à stocker des informations, incluant :
. un disque à la surface duquel les informations sont mémorisées,
. un moteur polyphasé destiné à entraîner le disque en rotation,
. au moins une tête de lecture/écriture destinée à scruter la surface du disque, et
. un dispositif d'alimentation du moteur tel que décrit plus haut.

L'invention sera mieux comprise à l'aide de la description suivante, faite à titre d'exemple non-limitatif et en regard des dessins annexés, dans lesquels :
- la figure 1 est un schéma fonctionnel partiel décrivant un dispositif d'alimentation qui met en oeuvre l'invention,
- la figure 2 est un schéma électrique décrivant des moyens de contrôle inclus dans un tel dispositif,
- la figure 3est un schéma fonctionnel décrivant des moyens d'identification inclus dans un tel dispositif,
- la figure 4 est un schéma fonctionnel décrivant des moyens de commande inclus dans un tel dispositif,
- les figures 5a, 6a, 7a et 8a sont des caractéristiques décrivant l'évolution théorique des signaux de commande présents dans les enroulements du moteur,
- les figures 5b, 6b, 7b et 8b sont des caractéristiques décrivant l'évolution théorique de signaux de consigne générés selon divers modes de mise en oeuvre de l'invention, et
- la figure 9 est un schéma qui représente un système de stockage d'informations mettant en oeuvre l'invention.

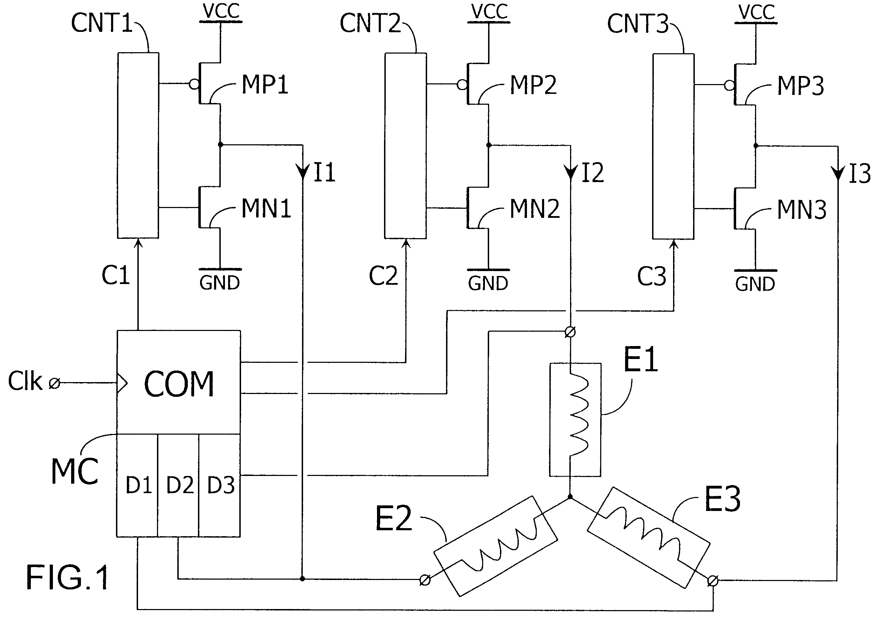

La figure 1 représente schématiquement un dispositif d'alimentation d'un moteur polyphasé, conforme à l'invention. Dans cet exemple, le moteur est un moteur triphasé muni d'un premier, d'un deuxième et d'un troisième enroulement E1, E2 et E3, disposés en étoile, et respectivement destinés à être excités au moyen d'un premier, d'un deuxième et d'un troisième signal de commande I1, I2 et 13, en l'occurrence des courants. A cet effet, chaque enroulement Ei (pour i=1 à 3) est alimenté en tension au moyen d'un étage de puissance comprenant deux transistors MPi et MNi, disposés en série entre deux bornes d'alimentation VCC et GND, c'est-à-dire une borne positive d'alimentation et une masse, un noeud intermédiaire entre lesdits transistors MPi et MNi étant relié à l'enroulement Ei. Dans cet exemple, les transistors MPi et MNi sont de type de conductivité complémentaires, respectivement des transistors PMOS et NMOS.

Le dispositif décrit ici inclut des moyens de contrôle CNTi (pour i=1 à 3) permettant de connecter alternativement chaque enroulement Ei à une borne de référence de potentiel, en l'occurrence VCC ou GND. Le dispositif d'alimentation inclut en outre un microcontrôleur MC, qui comprend un module de commande COM des moyens de contrôle CNTi, et des moyens d'identification Di (pour i=1 à 3), permettant d'identifier celui des enroulements Ei qui doit être connecté à la borne de référence de potentiel VCC ou GND.

Dans nombre de dispositifs d'alimentation connus, chaque enroulement est soumis à une tension Vei qui prend une succession de valeurs discrètes obtenues en ajustant un rapport cyclique d'un signal dit de consigne destiné à gérer la conduction des deux transistors MPi et MNi. Le transistor MPi étant conducteur lorsque le signal de consigne est au niveau logique zéro, le transistor MNi étant conducteur lorsque le signal de consigne est au niveau logique un, on désignera par Ki un rapport cyclique du signal de consigne, défini comme étant égal au rapport entre le temps pendant lequel ledit signal de consigne est au niveau logique 0 et la période du signal de consigne. On exprime alors la tension d'alimentation de chaque enroulement sous la forme Vei=Ki.VCC.

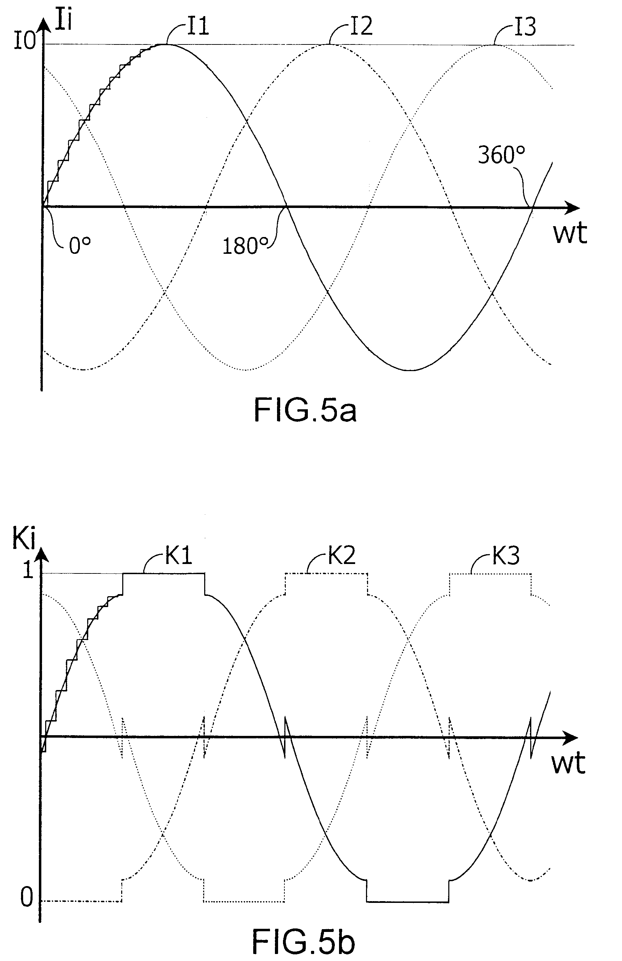

Pour une meilleure compréhension de l'explication du fonctionnement du dispositif d'alimentation décrit par la figure 1, on pourra consulter l'une des figures 5a, 6a, 7a ou 8a, qui illustrent l'évolution des signaux de commande Ii (pour i=1 à N). Bien que ces signaux soient constitués de valeurs discrètes, ils suivent des progressions sinusoïdales représentées sur lesdites figures. Pour simplifier l'explication, on posera Ii=I0.sin(wt-(i-1).2Π/3), où w=2Π.F, F étant la fréquence des signaux de commande.

Selon l'invention, dès que l'un des signaux de commande Ii devient supérieur en valeur absolue aux autres signaux de commande, l'enroulement Ei auquel il est associé est connecté à une borne de référence de potentiel. Ainsi, lorsque wt=60°, la valeur absolue du premier signal de commande I1 devient supérieure à celle des autres signaux de commande, tout en étant positive, et le premier enroulement E1 se trouve connecté à la borne positive d'alimentation VCC via le transistor MP1. Lorsque wt=120°, la valeur absolue du deuxième signal de commande I2 devient supérieure à celle des autres signaux de commande, et le deuxième enroulement E2 se trouve connecté à la masse GND via le transistor MN2, tandis que le premier enroulement E1 redevient soumis à son signal de consigne. Plus tard, lorsque wt=240°, la valeur absolue du premier signal de commande I1 redevient supérieure à celle des autres signaux de commande, et le premier enroulement E1 se trouve connecté à la masse GND via le transistor MN1.

Ainsi, chaque enroulement Ei (pour i=1 à 3) se trouve alternativement connecté pendant un sixième de période à la borne positive d'alimentation VCC ou à la masse GND, et ce au cours de chaque période, ce qui signifie que pendant un tiers de sa période, sa tension d'alimentation n'est pas déterminée par les commutations des transistors MPi et MNi de son étage de puissance associé. L'invention permet donc de réduire d'un tiers le volume des commutations nécessaires à l'alimentation des enroulements, et donc d'autant les pertes dues auxdites commutations.

Selon une variante de l'invention, on pourra choisir de connecter à la masse GND celui des enroulements Ei dont le signal de commande associé Ii présente la plus faible valeur instantanée. Un dispositif d'alimentation mettant en oeuvre cette variante fonctionne comme suit : lorsque wt=90°, la valeur instantanée du premier signal de commande I1 est négative et devient inférieure à celle des autres signaux de commande, et le premier enroulement E1 se trouve connecté à la masse GND via le transistor MN1. Lorsque wt=210°, la valeur instantanée du deuxième signal de commande I2 est négative et devient inférieure à celle des autres signaux de commande, et le deuxième enroulement E2 se trouve connecté à la masse GND via le transistor MN2, tandis que le premier enroulement E1 redevient soumis à son signal de consigne. Lorsque wt=330°, la valeur instantanée du troisième signal de commande I3 est négative et devient inférieure à celle des autres signaux de commande, et le troisième enroulement E3 se trouve connecté à la masse GND via le transistor MN3.

Ainsi, chaque enroulement se trouve connecté pendant un tiers de période à la masse GND, et ce au cours de chaque période, ce qui signifie que pendant un tiers de sa période, sa tension d'alimentation n'est pas déterminée par les commutations des transistors MPi et MNi de son étage de puissance associé. Cette variante de l'invention permet donc également de réduire d'un tiers le volume des commutations nécessaires à l'alimentation des enroulements, et donc d'autant les pertes dues auxdites commutations. Elle permet en outre de simplifier la structure des moyens de contrôle et des moyens d'identification, comme on le verra par la suite. Dans une autre variante de l'invention, on pourra choisir de connecter à la borne positive d'alimentation VCC celui des enroulements Ei dont le signal de commande associé Ii présente la plus grande valeur instantanée, avec des avantages similaires à ceux décrits précédemment. L'explication précédente est aisément transposable à la description d'une telle variante.

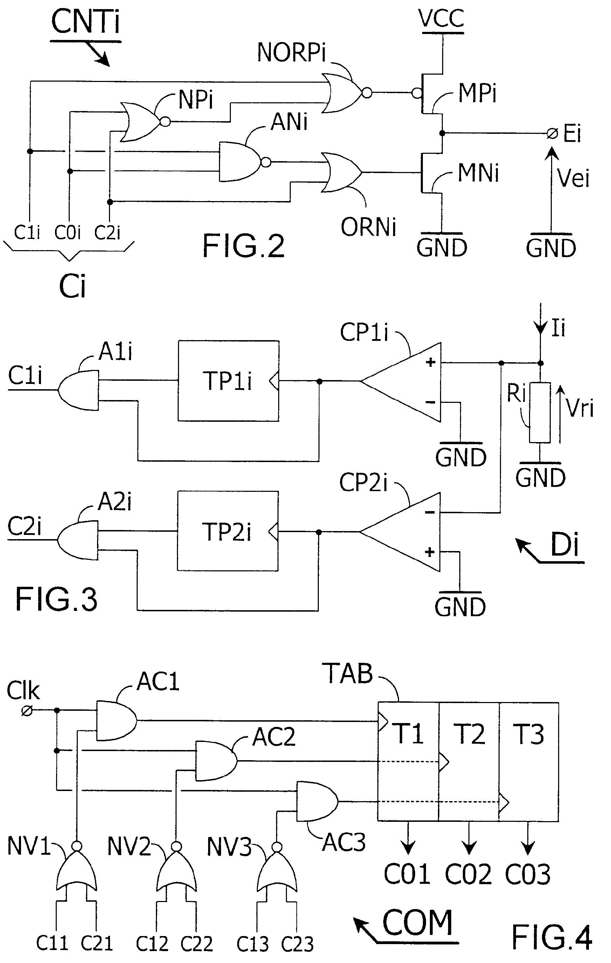

La figure 2 est un schéma électrique qui représente des moyens de contrôle CNTi destinés à piloter la conduction de deux transistors MPi et NNi, disposés en série entre deux bornes d'alimentation VCC et GND, c'est-à-dire une borne positive d'alimentation et une masse, un noeud intermédiaire entre lesdits transistors MPi et MNi étant relié à l'enroulement Ei. Dans cet exemple, les transistors MPi et MNi sont respectivement des transistors PMOS et NMOS. Les moyens de contrôle CNTi comprennent dans cet exemple une porte NON-OU logique NORPi, dont une sortie pilote la conduction du transistor PMOS MPi, dont une entrée reçoit un premier signal d'identification C1i et dont une autre entrée est connectée à une sortie d'une autre porte NON-OU logique NPi, dont une entrée reçoit un signal de consigne C0i et dont une autre entrée reçoit un deuxième signal d'identification C2i. Les premier et deuxième signaux d'identification C1i et C2i forment avec le signal de consigne C0i un signal de contrôle Ci qui provient du microcontrôleur MC.

Les moyens de contrôle CNTi comprennent en outre une porte OU logique ORNi, dont une sortie pilote la conduction du transistor NMOS MNi, dont une entrée reçoit le deuxième signal d'identification C2i et dont une autre entrée est connectée à une sortie d'une porte NON-ET logique ANi, dont une entrée reçoit le signal de consigne C0i et dont une autre entrée reçoit un premier signal d'identification C1i.

Lorsque la valeur absolue du signal de commande Ii excitant l'enroulement Ei est n'est pas plus grande que celle des autres signaux de commande, la tension d'alimentation Vei de l'enroulement Ei est déterminée par le rapport cyclique Ki précédemment défini du signal de consigne C0i, et Vei=Ki.VCC.

Lorsque la valeur absolue du signal de commande Ii associé à l'enroulement Ei est plus grande que celle des autres signaux de commande, le signal de commande Ii étant positif, les moyens d'identification attribuent un niveau logique 1 au premier signal d'identification C1i, qui force la sortie de la porte NON-OU logique NORPi au niveau logique 0 et provoque la conduction du transistor PMOS MPi, et donc la connexion de l'enroulement Ei à la borne positive d'alimentation VCC. Simultanément, le niveau logique 1 du premier signal d'identification C1i empêche, via la porte NON-ET logique ANi, un niveau logique 1 du signal de consigne C0i de provoquer la conduction du transistor NMOS MNi qui créerait un court-circuit.

Lorsque la valeur absolue du signal de commande Ii associé à l'enroulement Ei est plus grande que celle des autres signaux de commande, le signal de commande Ii étant négatif, les moyens d'identification attribuent un niveau logique 1 au deuxième signal d'identification C2i, qui force la sortie de la porte OU logique ORNi au niveau logique 1 et provoque la conduction du transistor NMOS MNi, et donc la connexion de l'enroulement Ei à la masse GND. Simultanément, le niveau logique 1 du deuxième signal d'identification C2i empêche, via la porte NON-OU logique NPi, un niveau logique 0 du signal de consigne C0i de provoquer la conduction du transistor PMOS MPi qui créerait un court-circuit.

On comprend bien que, dans le cas où, selon l'une des variantes de l'invention décrites plus haut, un enroulement Ei est connecté à la masse si la valeur instantanée de son signal de commande Ii est plus faible que celle des autres signaux de commande, il sera possible de simplifier considérablement la structure des moyens de contrôle. Dans un tel mode de mise en oeuvre de l'invention, un seul signal d'identification, en l'occurrence le deuxième signal d'identification C2i sera significatif, et les portes logiques NORPI et ANi seront inutiles. Inversement, si l'on choisit de connecter un enroulement à la borne positive d'alimentation VCC si la valeur instantanée de son signal de commande Ii est plus grande que celle des autres signaux de commande, seul le premier signal d'identification C1i sera significatif, et les portes logiques ORNi et NPi seront inutiles.

La figure 3 représente schématiquement un mode de réalisation possible des moyens d'identification Di (pour i=1 à 3).

Ces moyens comprennent des moyens de détection d'une inversion du signe d'un signal de commande qui incluent une résistance Ri, destinée à recevoir une image d'un signal de commande Ii, obtenue par exemple au moyen d'un miroir de courant non représenté sur la figure. Une borne de la résistance Ri est reliée à la masse GND, l'autre borne étant reliée à des entrées non-inverseuse et inverseuse d'un premier et d'un deuxième comparateur CP1i et CP2i, respectivement. Les premier et deuxième comparateurs CP1i et CP2i sont en outre munis d'entrées inverseuse et non-inverseuse, respectivement, qui sont reliées à la masse GND. Les moyens d'identification Di comportent en outre un premier et un deuxième modules de temporisation TP1i et TP2i, destinés à être activés lorsqu'il reçoivent un front montant sur des entrées d'horloge, qui sont respectivement reliées à des sorties des premier et deuxième comparateurs CP1i et CP2i.

Les moyens d'identification Di comprennent une première porte ET logique A1i, dont une entrée est reliée à une sortie du premier module de temporisation TP1i, dont une autre entrée est reliée à la sortie du premier comparateur CP1i, et dont une sortie est destinée à délivrer le premier signal d'identification C1i.

Les moyens d'identification Di comprennent enfin une deuxième porte ET logique A2i, dont une entrée est reliée à une sortie du deuxième module de temporisation TP2i, dont une autre entrée est reliée à la sortie du deuxième comparateur CP2i, et dont une sortie est destinée à délivrer le deuxième signal d'identification C2i.

Le fonctionnement des moyens d'identification sera mieux compris en considérant le cas où i=1 : lorsque, en t=0, le signal de commande Ii devient positif, une tension Vri présente aux bornes de la résistance Ri devient positive. Les sorties des premier et deuxième comparateurs CP1i et CP2i délivrent alors aux entrées d'horloge des premier et deuxième modules de temporisation TP1i TP2i des fronts montant et descendant, respectivement. Dans cet exemple de réalisation, le front descendant reçu par le deuxième module de temporisation TP2i est sans incidence sur le comportement de celui-ci. Par contre, le premier module de temporisation TP1i est activé par le front montant qu'il reçoit, et au bout d'un temps tp tel que w.tp=Π/6, fait basculer son signal de sortie depuis le niveau logique 0 vers le niveau logique 1. C'est à cet instant que la valeur absolue du signal de commande Ii devient effectivement supérieure à celle des autres signaux de commande. La première porte ET logique A1i, recevant alors sur ses deux entrées un niveau logique 1, attribue à son signal de sortie, qui constitue le premier signal d'identification C1i, le niveau logique 1 ordonnant aux moyens de contrôle CNTi de connecter à la borne positive d'alimentation VCC l'enroulement Ei excité par le signal de commande Ii. Au bout d'un temps tn suivant le basculement de la sortie du premier module de temporisation TP1i, choisi de sorte que tn=tp, la sortie dudit module de temporisation retrouve le niveau logique 0. Inversement, lorsque wt=n, le signal de commande Ii devient négatif et la tension Vri présente aux bornes de la résistance Ri devient négative. Les sorties des premier et deuxième comparateurs CP1i et CP2i délivrent alors aux entrées d'horloge des premier et deuxième modules de temporisation TP1i et TP2i des fronts descendant et montant, respectivement. Dans cet exemple de réalisation, le front descendant reçu par le premier module de temporisation TP1i est sans incidence sur le comportement de celui-ci. Par contre, le deuxième module de temporisation TP2i est activé par le front montant qu'il reçoit, et au bout d'un temps tp tel que w.tp=Π/6, fait basculer son signal de sortie depuis le niveau logique 0 vers le niveau logique 1. C'est à cet instant que la valeur absolue du signal de commande Ii devient effectivement supérieure à celle des autres signaux de commande. La deuxième porte ET logique A2i, recevant alors sur ses deux entrées un niveau logique 1, attribue à son signal de sortie, qui constitue le deuxième signal d'identification C2i, le niveau logique 1 ordonnant aux moyens de contrôle CNTi de connecter à la masse GND l'enroulement Ei excité par le signal de commande Ii. Au bout d'un temps tn suivant le basculement de la sortie du premier module de temporisation TP1i, choisi de sorte que tn=tp, la sortie dudit module de temporisation retrouve le niveau logique 0.

On comprend bien que, dans le cas où, selon l'une des variantes de l'invention décrites plus haut, un enroulement Ei est connecté à la masse si la valeur instantanée de son signal de commande Ii est plus faible que celle des autres signaux de commande, il sera possible de simplifier considérablement la structure des moyens d'identification. Dans un tel mode de mise en oeuvre de l'invention, un seul signal d'identification, en l'occurrence le deuxième signal d'identification C2i sera significatif, et le premier comparateur CP1i, le premier module de temporisation TP1i, ainsi que la première porte ET logique A1i seront inutiles. Inversement, si l'on choisit de connecter un enroulement à la borne positive d'alimentation VCC si la valeur instantanée de son signal de commande Ii est plus grande que celle des autres signaux de commande, seul le premier signal d'identification C1i sera significatif, et le deuxième comparateur CP2i, le deuxième module de temporisation TP2i, ainsi que la deuxième porte ET logique A2i seront inutiles. Dans ces deux cas de figure, il faudra choisir w.tp=Π/3 et tn=4.tp.

Dans un mode de mise en oeuvre particulier de l'invention, on pourra relier les bornes inverseuse et non-inverseuse des premier et deuxième comparateurs CP1i et CP2i à l'enroulement Ei, les bornes non-inverseuse et inverseuse desdits comparateurs étant reliées à la masse GND. Chaque transistor MPI et MNi présente en effet une résistance passante Ron qui jouera le rôle de la résistance Ri lorsqu'il sera conducteur

La figure 4 représente schématiquement un module de commande COM inclus dans un dispositif d'alimentation selon un mode de mis en oeuvre préféré de l'invention. Ce module de commande a vocation à être intégré dans le microcontrôleur MC, et comprend une table TAB contenant trois zones T1, T2 et T3, respectivement destinées à délivrer les signaux de consigne C01, C02, et C03, dont les rapports cycliques K1, K2, et K3 sont déterminés au moyen de pointeurs, non représentés sur la figure, incrémentés au moyen d'un signal d'horloge C1k selon une technique bien connue de l'homme du métier. Le module de commande COM comprend en outre des moyens d'inhibition ACi, ANi, et NVi (pour i=1 à 3) de chacun des pointeurs, moyens d'inhibition qui sont activés lorsque l'un des premier ou deuxième signaux d'identification C1i ou C2i correspondant au signal de consigne C0i obtenu via le pointeur considéré signale que l'enroulement correspondant doit être connecté à une borne de référence.

Ainsi, lorsqu'un enroulement Ei a été identifié comme devant être connecté à l'une des bornes de référence, l'un de ses signaux d'identification associés C1i ou C2i est au niveau logique 1, forçant des sorties des portes NON-OU logique NVi et ET logique ACi à 0, et suspendant l'arrivée du signal d'horloge Clk à la zone Ti, empêchant ainsi l'incrémentation du pointeur. Lorsque l'inhibition sera levée, c'est-à-dire lorsque la tension d'alimentation de l'enroulement Ei devra à nouveau être déterminée au moyen du rapport cyclique Ki du signal de son consigne associé C0i, les deux signaux d'identification C1i et C2i seront au niveau logique 0 et les impulsions d'horloge pourront à nouveau parvenir à la zone Ti, autorisant l'incrémentation du pointeur correspondant.

Dans les dispositifs d'alimentation connus, la valeur d'un rapport cyclique Ki0 d'un signal de consigne C0i s'exprime généralement sous la forme Ki0=1/2+ K.sin(wt-(i-1).2Π/3), K étant une constante qui détermine l'amplitude I0 des signaux de commande Ii, et est nécessairement inférieur ou égal à 1/2, puisqu'on pose Vei=Ki0.VCC. Lorsque tous les rapports cycliques Ki0 sont égaux à 1/2, tous les enroulements reçoivent une tension d'alimentation égale à VCC/2 et le moteur est à l'arrêt. La valeur maximale de la tension d'alimentation Vei nécessaire à l'obtention de signaux de commande Ii de la forme Ii=I0 .sin(wt-(i-1).2Π/3) est donc, dans les dispositifs d'alimentation connus, égale à VCC.

Pour que la forme sinusoïdale des signaux de commande Ii soit préservée, il conviendra, selon un mode préféré de mise en oeuvre de l'invention, d'agencer la table TAB de sorte que le rapport cyclique Ki d'un signal de consigne C0i associé à un enroulement Ei qui n'est pas connecté à une borne de référence de potentiel soit égal à une différence entre le rapport cyclique Ki0 qu'aurait du avoir ledit signal de consigne C0i si chacun des trois enroulements était soumis à un signal de consigne, et le rapport cyclique du signal de consigne qui aurait alors été associé à l'enroulement qui est connecté à la borne de référence de potentiel.

Par exemple, pendant un intervalle de temps au cours duquel le premier enroulement E1 est connecté à la masse GND, on aura, dans ce mode de mise en oeuvre de l'invention, K2=K20-K10 et K3=K30-K10. Ces conditions peuvent être exprimées sous la forme : K2=K.(sin(wt-2Π/3)-sin(wt)) et K3=K.(sin(wt-4Π/3)-sin(wt)), soit, en utilisant les formules trigonométriques sin(a)-sin(b)=2.sin((a-b)/2).sin((a+b)/2) et cos(a)=sin(Π/2-a), K2=3^{1/2}.K.sin(wt-5Π/6) et K2=3^{1/2}.K.sin(wt-7Π/6).

Il apparaît donc que, du fait de la compensation des rapports cycliques réalisée afin que les signaux de commande Ii conservent une forme sinusoïdale malgré le fait que chaque enroulement se trouve connecté à une borne de référence de potentiel pendant un tiers de la période desdits signaux de commande, la valeur maximale des rapports cycliques Ki est égale à 3^{1/2}/2, puisque K est inférieur ou égal à 1/2. Une tension d'alimentation de 3^{1/2}.VCC/2 soit environ 0,87.VCC est donc, dans ce mode de réalisation préféré de l'invention, suffisante à l'obtention de signaux de commande Ii de la forme Ii-I0.sin(wt-(i-1).2Π/3).

Ceci permet donc une réduction d'environ 15% de la puissance consommée par le moteur par rapport à celle qui, à travail égal, lui est nécessaire lorsqu'il est alimenté au moyen des dispositifs d'alimentation connus, ou, à puissance consommée égale, une augmentation de 15% du travail fourni par le moteur. L'invention permet donc, dans ce mode de réalisation préféré, une augmentation de 15% du rendement du dispositif d'alimentation du moteur en plus de l'amélioration obtenue par la réduction d'un tiers des pertes dues au volume des commutations dans les étages de puissance.

Les figures 5a et 5b représentent respectivement la forme des signaux de commande Ii et celle des rapports cycliques Ki de leurs signaux de consigne C0i associés, dans un mode de mise en oeuvre de l'invention ou un enroulement Ei est connecté alternativement à la borne positive d'alimentation VCC ou à la masse GND lorsque la valeur absolue de son signal de commande associé Ii est supérieure à celle des autres signaux de commande. Les courbes sinusoïdales représentent l'évolution suivie par les valeurs discrètes qui, le plus souvent, constituent en réalité ces signaux, valeurs discrètes qui n'ont été représentées que sur les premières portions des courbes I1 et K1 suivant l'instant t=0 dans un souci de préserver une bonne lisibilité de la figure. Le pas qui a été choisi ici pour incrémenter les pointeurs de la table TAB est dans cet exemple, de Π/9, ou 10°, mais il va de soi que d'autres valeurs de pas pourront être choisies en fonction des contraintes particulières liées aux applications dans lesquelles la mise en oeuvre de l'invention est envisagée.

Les signaux de commande Ii suivent une évolution exprimée par la formule Ii=I0.sin(wt-(i-1).2Π/3).

Tout au long de l'intervalle [60°;120°], le premier signal de commande I1 est positif et sa valeur absolue est supérieure à celle des autres signaux de commande I2 et I3. Le premier enroulement E1 est alors connecté à la borne positive d'alimentation VCC, ce qui équivaut à dire que le rapport cyclique K1 de son signal de consigne associé C01 est maintenu à 1, mais pendant cet intervalle, l'enroulement E1 n'est plus soumis audit signal de consigne. Tout au long de l'intervalle [210°;330°], le premier signal de commande I1 est négatif et sa valeur absolue est supérieure à celle des autres signaux de commande I2 et I3. Le premier enroulement E1 est alors connecté à la masse GND, ce qui équivaut à dire que le rapport cyclique K1 de son signal de consigne associé C01 est maintenu à 0, mais pendant cet intervalle, l'enroulement E1 n'est plus soumis audit signal de consigne.

On a vu précédemment que, lorsque le premier enroulement E1 est connecté à la masse GND, les valeurs des rapports cycliques des signaux de consigne C02 et C03 associés aux autres enroulements E2 et E3 suivent avantageusement des évolutions définies par les relations K2=3^{1/2}.K.sin(wt-5Π/6) et K3=3^{1/2}.K.sin(wt-7Π/6). Ceci explique que les courbes représentatives des évolutions desdits rapports cycliques K2 et K3 sont respectivement en retard et en avance de 30° par rapport à leurs signaux de commande associés I2 et I3.

Si l'on a choisi précédemment l'exemple d'une connexion à la masse du premier enroulement E1 pour faciliter l'explication de ce phénomène, il va de soi que les évolutions des rapports cycliques de chaque couple de signaux de consigne d'enroulements qui, au cours d'un intervalle donné, ne sont pas connectés à une borne de référence, sont similairement affectés par ce phénomène, du fait de leur périodicité.

On voit bien sur la figure que la valeur maximale des rapports cycliques Ki nécessaires à l'obtention de signaux de commande Ii de la forme Ii=I0.sin(wt-(i-1).2Π/3) n'est que de 0,87, au lieu de la valeur 1 qui est nécessaire aux dispositifs d'alimentation connus, ce qui illustre l'amélioration de 15% du rendement obtenue, en plus de la réduction des pertes dues aux commutations, dans ce mode de mise en oeuvre de l'invention.

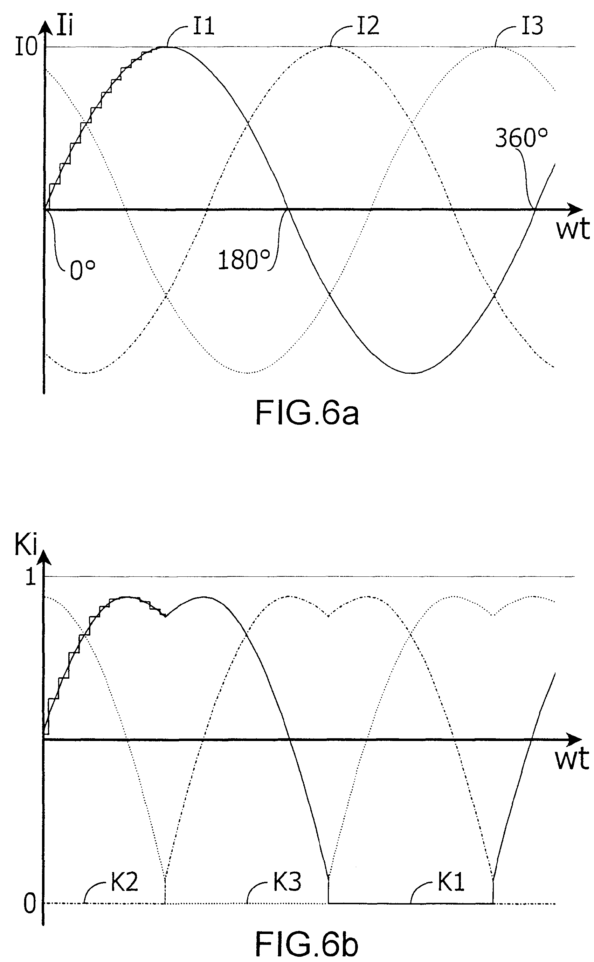

Les figures 6a et 6b représentent respectivement la forme des signaux de commande Ii et celle des rapports cycliques Ki de leurs signaux de consigne C0i associés, dans un mode de mise en oeuvre de l'invention ou un enroulement Ei est connecté à la masse GND lorsque la valeur instantanée de son signal de commande associé Ii est inférieure à celle des autres signaux de commande. La figure 6a est identique à la figure 5a, décrivant des signaux de commande Ii qui suivent une évolution exprimée par la formule Ii=I0.sin(wt-(i-1).2Π/3). Tout au long de l'intervalle [210°;330°], la valeur instantanée du premier signal de commande I1 est inférieure à celle des autres signaux de commande I2 et I3. Le premier enroulement E1 est alors connecté à la masse GND, ce qui équivaut à dire que le rapport cyclique K1 de son signal de consigne associé C01 est maintenu à 0, mais pendant cet intervalle, l'enroulement E1 n'est plus soumis audit signal de consigne. On a vu précédemment que, lorsque le premier enroulement E1 est connecté à la masse GND, les valeurs des rapports cycliques des signaux de consigne C02 et C03 associés aux autres enroulements E2 et E3 suivent avantageusement des évolutions définies par les relations K2=3^{1/2}.K.sin(wt-5Π/6) et K3=3^{1/2}.K.sin(wt-7Π/6). Ceci explique que les courbes représentatives des évolutions desdits rapports cycliques K2 et K3 sont respectivement en retard et en avance de 30° par rapport à leurs signaux de commande associés I2 et I3.

On voit bien sur la figure que la valeur maximale des rapports cycliques Ki nécessaires à l'obtention de signaux de commande Ii de la forme Ii=I0.sin(wt-(i-1).2Π/3) n'est que de 0,87, au lieu de la valeur 1 qui est nécessaire aux dispositifs d'alimentation connus, ce qui illustre l'amélioration de 15% du rendement obtenue, en plus de la réduction des pertes dues aux commutations, dans ce mode de mise en oeuvre de l'invention.

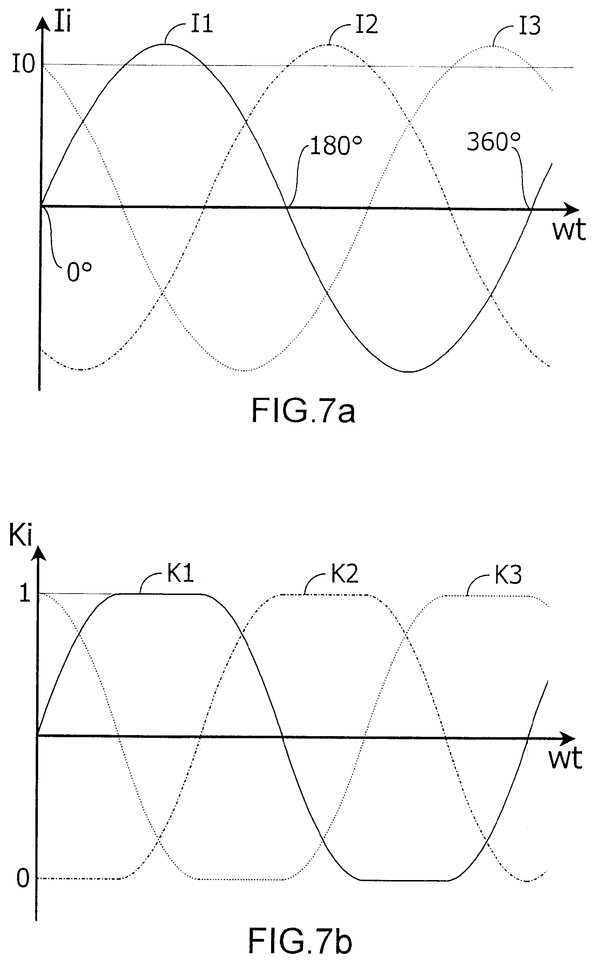

Les figures 7a et 7b permettent d'illustrer sous un autre jour cet avantage de l'invention. Ces figures représentent respectivement la forme des signaux de commande Ii et celle des rapports cycliques Ki de leurs signaux de consigne C0i associés, dans un mode de mise en oeuvre de l'invention ou un enroulement Ei est connecté alternativement à la borne positive d'alimentation VCC ou à la masse GND lorsque la valeur absolue de son signal de commande associé Ii est supérieure à celle des autres signaux de commande. Les signaux de commande Ii suivent une évolution exprimée par la formule Ii=(2/3^{1/2}).I0.sin(wt-(i-1).2Π/3), c'est-à-dire que le moteur fournit un travail environ 1,15 fois plus grand que dans le cas décrit par les figures 5a et 6a. Conformément aux explications précédentes, les valeurs des rapports cycliques Ki des signaux de consigne C0i associés aux signaux de commande Ii évoluent dans ce cas de figure entre 0 et 1, c'est-à-dire que, selon ce mode de mise en oeuvre avantageux de l'invention, une tension d'alimentation des étages de puissance égale à celle nécessaire aux dispositifs d'alimentation connus permet d'obtenir une augmentation de 15% du travail fourni par le moteur.

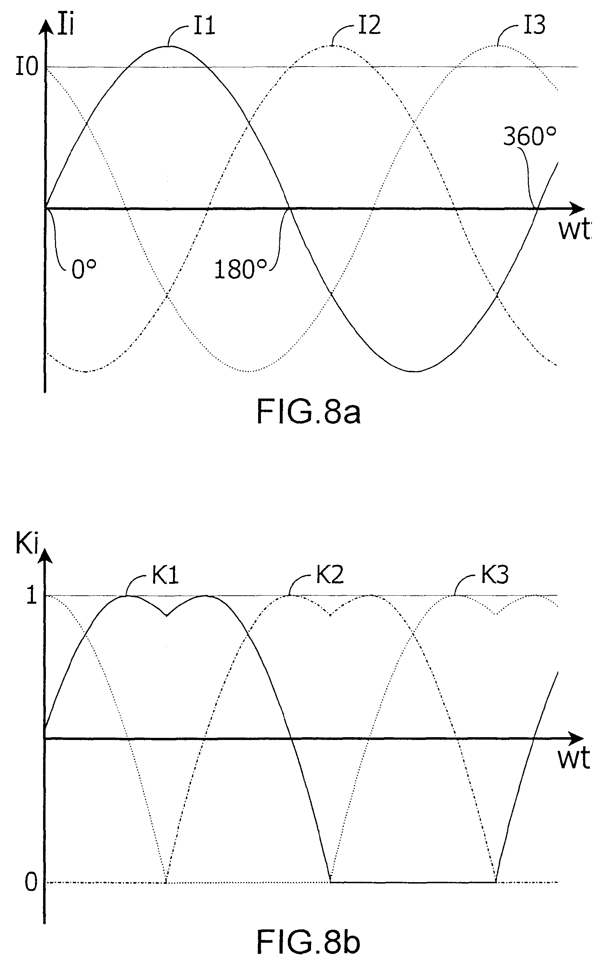

Les figures 8a et 8b représentent respectivement la forme des signaux de commande Ii et celle des rapports cycliques Ki de leurs signaux de consigne C0i associés, dans un mode de mise en oeuvre de l'invention ou un enroulement Ei est connecté à la masse GND lorsque la valeur instantanée de son signal de commande associé Ii est inférieure à celle des autres signaux de commande.

Les signaux de commande Ii suivent une évolution exprimée par la formule Ii=(2/3^{1/2}).I0.sin(wt-(i-1).2Π/3), c'est-à-dire que le moteur fournit un travail environ 1,15 fois plus grand que dans le cas décrit par les figures 5a et 6a. Ici encore, on observe que les valeurs des rapports cycliques Ki des signaux de consigne C0i associés aux signaux de commande Ii évoluent entre 0 et 1, c'est-à-dire qu'une tension d'alimentation des étages de puissance égale à celle nécessaire aux dispositifs d'alimentation connus permet d'obtenir une augmentation de 15% du travail fourni par le moteur.

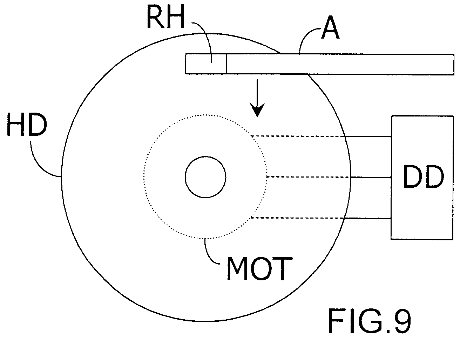

La figure 9 représente très schématiquement un appareil destiné à stocker des informations, incluant :
. un disque HD à la surface duquel les informations sont mémorisées,
. un moteur polyphasé MOT destiné à entraîner le disque en rotation,
. au moins une tête de lecture/écriture RH, disposée au bout d'un bras tangentiel A destinée à scruter la surface du disque, et
. un dispositif d'alimentation DD du moteur MOT.

## Revendications

1. Procédé pour alimenter un moteur polyphasé au moyen d'une pluralité d'enroulements, chacun étant destiné à être excité au moyen d'un signal de commande, procédé incluant les étapes suivantes :
. identification de celui des signaux de commande qui a la plus grande valeur absolue, et
. connexion à une borne de référence de potentiel de l'enroulement correspondant.

2. Procédé pour alimenter un moteur polyphasé au moyen d'une pluralité d'enroulements, chacun étant destiné à être excité au moyen d'un signal de commande, procédé incluant les étapes suivantes :
. identification de celui des signaux de commande qui a la plus grande valeur instantanée, et
. connexion à une borne de référence de potentiel de l'enroulement correspondant.

3. Procédé pour alimenter un moteur polyphasé au moyen d'une pluralité d'enroulements, chacun étant destiné à être excité au moyen d'un signal de commande, procédé incluant les étapes suivantes :
. identification de celui des signaux de commande qui a la plus faible valeur instantanée, et
. connexion à une borne de référence de potentiel de l'enroulement correspondant.

4. Procédé selon l'une des revendications 1, 2, ou 3, dans lequel l'étape d'identification inclut une détection d'une inversion de signe d'un signal de commande.

5. Procédé selon l'une des revendications 1, 2 ou 3, dans lequel chaque signal de commande est constitué d'une succession de valeurs discrètes, qui, lorsque l'enroulement excité par ledit signal n'est pas relié à une borne de référence de potentiel, suivent une évolution pseudo sinusoïdale en fonction du temps.

6. Procédé selon la revendication 5, dans lequel chaque valeur discrète est obtenue en ajustant un rapport cyclique d'un signal dit de consigne destiné à gérer la conduction de deux transistors disposés en série entre deux bornes d'alimentation, un noeud intermédiaire entre lesdits transistors étant relié à une borne de l'un des enroulements.

7. Procédé selon la revendication 6, dans lequel le rapport cyclique d'un signal de consigne associé à un enroulement qui n'est pas connecté à une borne de référence de potentiel est égal à une différence entre le rapport cyclique qu'aurait du avoir ledit signal de consigne si chacun des trois enroulements était soumis à un signal de consigne, et le rapport cyclique du signal de consigne qui aurait alors été associé à l'enroulement qui est connecté à la borne de référence de potentiel.

8. Dispositif d'alimentation d'un moteur polyphasé muni d'une pluralité d'enroulements, chacun étant destiné à être excité au moyen d'un signal de commande, dispositif incluant :
. des moyens de contrôle permettant de connecter alternativement chaque enroulement à une borne de référence de potentiel, et
. des moyens d'identification permettant d'identifier celui des enroulements qui doit être connecté à la borne de référence de potentiel.

9. Dispositif d'alimentation selon la revendication 8, dans lequel les moyens d'identification sont agencés de manière à identifier celui des enroulements qui est soumis au signal de commande ayant la plus grande valeur absolue.

10. Dispositif d'alimentation selon la revendication 8, dans lequel les moyens d'identification sont agencés de manière à identifier celui des enroulements qui est soumis au signal de commande ayant la plus grande valeur instantanée.

11. Dispositif d'alimentation selon la revendication 8, dans lequel les moyens d'identification sont agencés de manière à identifier celui des enroulements qui est soumis au signal de commande ayant la plus faible valeur instantanée.

12. Dispositif d'alimentation selon la revendication 8, dans lequel les moyens d'identification incluent :
. des moyens de détection d'une inversion du signe d'un signal de commande, et
. des moyens de temporisation, activés par les moyens de détection, destinés à délivrer un signal d'identification aux moyens de contrôle à l'issue d'un délai prédéterminé suivant une détection d'une inversion du signe d'un signal de commande.

13. Appareil destiné à stocker des informations, incluant :
. un disque à la surface duquel les informations sont mémorisées,
. un moteur polyphasé destiné à entraîner le disque en rotation,
. au moins une tête de lecture/écriture destinée à scruter la surface du disque, et
. un dispositif d'alimentation du moteur conforme à la revendication 8.
